(19) **Europäisches Patentamt / European Patent Office / Office européen des brevets**

(11) **EP 4 181 038 A1**

(12) # EUROPEAN PATENT APPLICATION
published in accordance with Art. 153(4) EPC

(43) Date of publication:
**17.05.2023 Bulletin 2023/20**

(21) Application number: **21837404.9**

(22) Date of filing: **28.06.2021**

(51) International Patent Classification (IPC):
***G06Q 10/04*** *(2023.01)*

(52) Cooperative Patent Classification (CPC):
**G06Q 10/04**

(86) International application number:
**PCT/JP2021/024339**

(87) International publication number:
**WO 2022/009719 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2020 JP 2020119368**

(71) Applicant: **Daikin Industries, Ltd.**
**Osaka-shi, Osaka 530-0001 (JP)**

(72) Inventors:
• **TATEMATSU, Fumiya**
**Osaka-shi, Osaka 530-8323 (JP)**
• **MIYAKE, Souichirou**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **GENERATION METHOD, GENERATION DEVICE, PROGRAM, INFORMATION PROCESSING METHOD, AND INFORMATION PROCESSING DEVICE**

(57) An information processing apparatus executes a process of generating a model configured to estimate a value by which a distribution of actual values of a demand amount of an article or a service is divided at a position that deviates by a predetermined amount from a center of the distribution, based on a data set including a combination of the actual value of the demand amount and information indicating a status when demand arises.

FIG.4

```
        START
          │
          ▼
ACQUIRE DATA USED FOR MACHINE LEARNING        ~S101
          │
          ▼
GENERATE LEARNED MODEL BY MACHINE LEARNING    ~S102
          │
          ▼
DISTRIBUTE GENERATED LEARNED MODEL            ~S103
          │
          ▼
         END
```

EP 4 181 038 A1

**Description**

[Technical Field]

The present disclosure relates to a generation method, a generation apparatus, a program, an information processing method, and an information processing apparatus.

[Background Art]

Conventionally, demand for articles and services is predicted. In demand prediction, techniques for estimating errors in the prediction values are also known (see, e.g., Patent Document 1).

[Citation List]

[Patent Literature]

[PTL 1]
Japanese Laid-Open Patent Application No. 2017-10436

[Summary of Invention]

[Technical Problem]

However, with the conventional technology, there are cases where it is not possible to predict the demand amount appropriately, for example, when the amount of variation in the demand amount varies according to explanatory variables, when the distribution of the actual values of the demand amount according to explanatory variables is biased, or the like. The purpose of the present disclosure is to provide technology by which the demand amount can be appropriately predicted.

[Solution to Problem]

In a generation method according to a first aspect of the present disclosure, an information processing apparatus executes a process of generating a model configured to estimate a value by which a distribution of actual values of a demand amount of an article or a service is divided at a position that deviates by a predetermined amount from a center of the distribution, based on a data set including a combination of the actual value of the demand amount and information indicating a status when demand arises.

Further, a second aspect of the present disclosure is the generation method according to the first aspect, wherein

the model includes two types of models, and
the process of generating the model includes generating

a first model among the two types of models configured to infer the center of the distribution by performing learning by using the data set, and
a second model among the two types of models configured to infer a prediction range of the distribution by performing learning by using an asymmetric loss function that is obtained based on a predetermined quantile with respect to the distribution of the actual values of the demand amount.

Further, a third aspect of the present disclosure is the generation method according to the second aspect, wherein the process of generating the model includes generating the second model by performing learning by using a loss function that becomes a curve within a predetermined range including a point where there is no difference between the predetermined quantile and the actual value of the demand amount.

Further, a fourth aspect of the present disclosure is the generation method according to the first aspect, wherein

the model includes two types of models, and
the process of generating the model includes generating

a first model among the two types of models configured to infer the center of the distribution by performing learning by using the data set, and

a second model among the two types of models configured to infer a prediction range of the distribution from a probability distribution of an error range of a prediction value of the demand amount.

Further, a fifth aspect of the present disclosure is the generation method according to the fourth aspect, wherein the process of generating the model includes generating the second model configured to select one function from among a plurality of types of functions that change according to the prediction value of the demand amount, and to infer the prediction range of the distribution from the probability distribution of the error range that is determined by the selected function.

Further, a sixth aspect of the present disclosure is the generation method according to any one of the first to fifth aspects, wherein the information indicating the status includes at least one of a number of new orders received, a temperature, weather, a manufacturing cost per product, an actual demand excluding an order of an amount greater than or equal to a threshold, an amount of orders received but not delivered, an amount of potential orders that may be received, a sales target set for a sales representative, and a sales target set for a store.

Further, a seventh aspect of the present disclosure is the generation method according to any one of the first to sixth aspects, wherein the information indicating the status includes at least one of an operating capacity of an air conditioner shipped within a predetermined period, a number of indoor units shipped within a predetermined period, and a number of outdoor units shipped within a predetermined period.

A generation apparatus according to an eighth aspect of the present disclosure is configured to generate a model configured to estimate a value by which a distribution of a demand amount of an article or a service in a predetermined status is divided at a position that deviates by a predetermined amount from a center of the distribution, based on a data set including a combination of an actual value of the demand amount and information indicating a status when demand arises.

A program according to a ninth aspect of the present disclosure causes an information processing apparatus to execute a process of generating a model configured to estimate a value by which a distribution of actual values of a demand amount of an article or a service is divided at a position that deviates by a predetermined amount from a center of the distribution, based on a data set including a combination of the actual value of the demand amount and information indicating a status when demand arises.

In an information processing method according to a tenth aspect of the present disclosure, an information processing apparatus executes a process of outputting a value by which a distribution of actual values of a demand amount of an article or a service is divided at a position that deviates by a predetermined amount from a center of the distribution, by using a model generated based on a data set including a combination of the actual value of the demand amount and information indicating a status when demand arises.

An information processing apparatus according to an eleventh aspect of the present disclosure is configured to output a value by which a distribution of actual values of a demand amount of an article or a service is divided at a position that deviates by a predetermined amount from a center of the distribution, by using a model generated based on a data set including a combination of the actual value of the demand amount and information indicating a status when demand arises.

A program according to a twelfth aspect of the present disclosure causes an information processing apparatus to execute a process of outputting a value by which a distribution of actual values of a demand amount of an article or a service is divided at a position that deviates by a predetermined amount from a center of the distribution, by using a model generated based on a data set including a combination of the actual value of the demand amount and information indicating a status when demand arises.

[Brief Description of Drawings]

[FIG. 1] FIG. 1 illustrates an example of the system configuration of the information processing system according to the embodiment.
[FIG. 2] FIG. 2 illustrates an example of the hardware configuration of an information processing apparatus according to an embodiment.
[FIG. 3] FIG. 3 illustrates an example of the functional configuration of the information processing apparatus according to the embodiment.
[FIG. 4] FIG. 4 is a flowchart illustrating an example of processing during learning of the information processing apparatus according to the embodiment.
[FIG. 5] FIG. 5 is a diagram illustrating an example of training data according to the embodiment.
[FIG. 6] FIG. 6 is a diagram illustrating an example of a loss function according to an embodiment.
[FIG. 7] FIG. 7 is a flowchart illustrating an example of processing during inference of an information processing apparatus according to an embodiment.

[FIG. 8] FIG. 8 is a diagram illustrating an example of the display screen of the demand prediction result according to the embodiment.

[FIG. 9] FIG. 9 is a flowchart illustrating an example of processing during learning of the information processing apparatus 10A according to the embodiment.

[FIG. 10] FIG. 10 is a flowchart illustrating an example of processing during inference of the information processing apparatus 10B according to the embodiment.

[FIG. 11] FIG. 11 is an explanatory diagram illustrating an example of processing during inference of the information processing apparatus 10B according to the second embodiment.

[FIG. 12] FIG. 12 is an illustration of an example of an error model in which the error range is inferred according to the prediction value of the demand amount.

[FIG. 13] FIG. 13 is an illustration of an example of the error range according to regular variance estimation.

[FIG. 14] FIG. 14 illustrates one example of a method of generating a suitable error model by comparing multiple functions.

[Description of Embodiments]

Each embodiment will be described below with reference to the drawings. In this specification and the drawings, elements having substantially the same functional configuration are denoted by the same symbols, thereby omitting overlapping descriptions.

<System configuration>

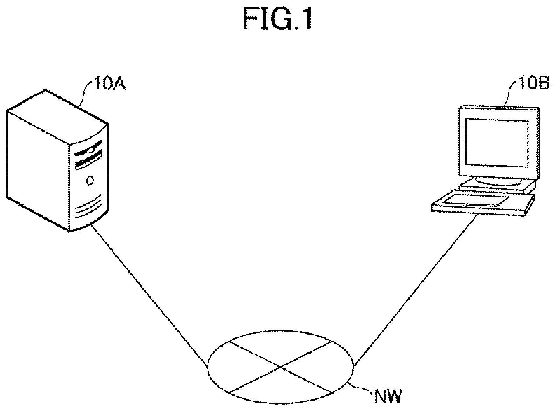

First, the system configuration of an information processing system 1 is described. FIG. 1 illustrates an example of the system configuration of the information processing system 1 according to the embodiment. As illustrated in FIG. 1, the information processing system 1 includes an information processing apparatus 10A and an information processing apparatus 10B (hereafter, when it is not necessary to distinguish each of these, these are simply referred to as the "information processing apparatus 10"). The number of information processing apparatuses 10 is not limited to the example in FIG. 1. The information processing apparatus 10A is an example of a "generating apparatus".

The information processing apparatus 10A and the information processing apparatus 10B may be connected so as to be able to communicate via a network NW such as a LAN (Local Area Network), a wireless LAN, the Internet, and a mobile phone network such as 5G.

The information processing apparatus 10A is, for example, an information processing apparatus such as a server. The information processing apparatus 10A may be a server on a cloud. The information processing apparatus 10A performs machine learning to generate models such as learned models to predict demand for various articles and services (hereafter, also referred to as "articles, etc." as appropriate.). An example of generating a learned model is described below. The information processing apparatus 10A may generate, for example, a learned model for predicting the product shipment amount, for predicting the component demand amount, for predicting the number of maintenance requests (repair requests), for predicting the number of calls at a call center (the number of inquiries from customers), for predicting the demand amount of delivery trucks, for predicting the consumption amount of raw materials such as chemicals, and the like.

The information processing apparatus 10B may be, for example, an information processing apparatus such as a server, a desktop PC (Personal Computer), a notebook PC, a tablet PC, or the like, installed at each location of an operator providing articles or services. The information processing apparatus 10B uses the learned model generated by the information processing apparatus 10A to predict demand. The information processing apparatus 10A and the information processing apparatus 10B may be the same apparatus.

<Hardware configuration of the information processing apparatus 10>

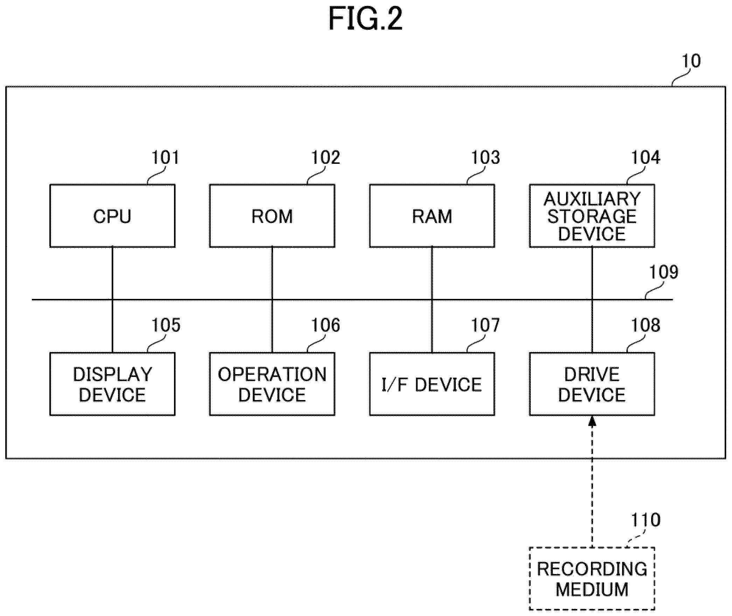

Next, the hardware configuration of the information processing apparatus 10 according to the embodiment will be described. FIG. 2 illustrates an example of the hardware configuration of the information processing apparatus 10 according to the embodiment. As illustrated in FIG. 2, the information processing apparatus 10 includes a CPU (Central Processing Unit) 101, a ROM (Read Only Memory) 102, and a RAM (Random Access Memory) 103. The CPU 101, the ROM 102, and the RAM 103 form what is referred to as a computer. The information processing apparatus 10 also includes an auxiliary storage device 104, a display device 105, an operation device 106, an I/F (Interface) device 107, and a drive device 108. The hardware elements of the information processing apparatus 10 are connected to each other via a bus 109.

The CPU 101 is an arithmetic device that executes various programs (e.g., machine learning programs, etc.)

installed in the auxiliary storage device 104. The ROM 102 is a non-volatile memory. The ROM 102 functions as a main storage device and stores various programs, data and the like necessary for the CPU 101 to execute various programs installed in the auxiliary storage device 104. Specifically, the ROM 102 stores a boot program such as BIOS (Basic Input/Output System) or EFI (Extensible Firmware Interface).

The RAM 103 is a volatile memory such as DRAM (Dynamic Random Access Memory) or SRAM (Static Random Access Memory). The RAM 103 functions as a main storage device and provides a work area that is expanded when various programs installed in the auxiliary storage device 104 are executed by the CPU 101.

The auxiliary storage device 104 stores various programs and information used when various programs are executed.

The display device 105 is a display device for displaying various kinds of information. The operation device 106 is an operation device for receiving various operations. The I/F device 107 is a communication device that communicates with external devices.

The drive device 108 is a device for setting a recording medium 110. The recording medium 110 here includes media for recording information optically, electrically, or magnetically, such as a CD-ROM, a flexible disk, a magneto-optical disk, etc. The recording medium 110 may include a semiconductor memory or the like for electrically recording information, such as a ROM, a flash memory, or the like.

Various programs to be installed in the auxiliary storage device 104 are installed, for example, when the distributed recording medium 110 is set in the drive device 108 and various programs recorded in the recording medium 110 are read by the drive device 108. Alternatively, various programs to be installed in the auxiliary storage device 104 may be installed by downloading the programs from a network that is not illustrated.

functional configuration>

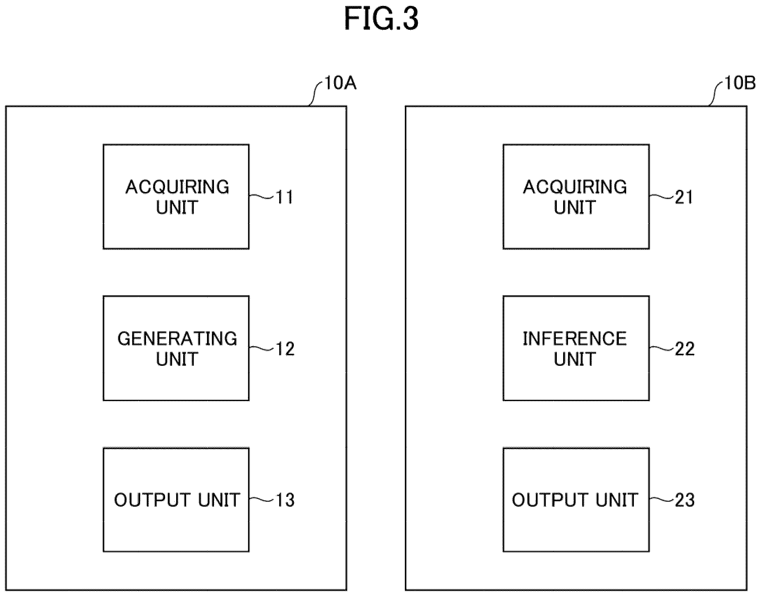

Next, the functional configuration of the information processing system 1 according to the embodiment will be described with reference to FIG. 3. FIG. 3 illustrates an example of the functional configuration of the information processing apparatus 10 according to the embodiment.

<<Information processing apparatus 10A>>

The information processing apparatus 10A includes an acquiring unit 11, a generating unit 12, and an output unit 13. These units may be implemented by the cooperation of, for example, one or more programs installed in the information processing apparatus 10A and the CPU 101, the ROM 102, the RAM 103, and the like of the information processing apparatus 10A.

The acquiring unit 11 acquires various kinds of data from a storage unit of an external device and a storage unit of the information processing apparatus 10A. The acquiring unit 11 acquires data for performing machine learning, for example.

The generating unit 12 generates a learned model by performing machine learning based on the data acquired by the acquiring unit 11.

The output unit 13 outputs various kinds of information. The output unit 13, for example, transmits (distributes) the learned model generated by the generating unit 12 to the information processing apparatus 10B.

<<Information processing apparatus 10B>>

The information processing apparatus 10B includes an acquiring unit 21, an inference unit 22, and an output unit 23. These units may be implemented by the cooperation of, for example, one or more programs installed in the information processing apparatus 10B and the CPU 101, the ROM 102, the RAM 103, and the like of the information processing apparatus 10B.

The acquiring unit 21 acquires various kinds of data from the storage unit of an external device and the storage unit of the information processing apparatus 10B. The acquiring unit 21 acquires, for example, a learned model from the information processing apparatus 10A. The acquiring unit 21 acquires data (test data) for making inferences by using the learned model, for example.

The inference unit 22 makes a prediction (inference) of the demand amount based on the learned model and the test data acquired by the acquiring unit 21. The output unit 23 performs display or the like based on the demand amount predicted by the inference unit 22.

<Processing of the first embodiment>

«Processing during learning»

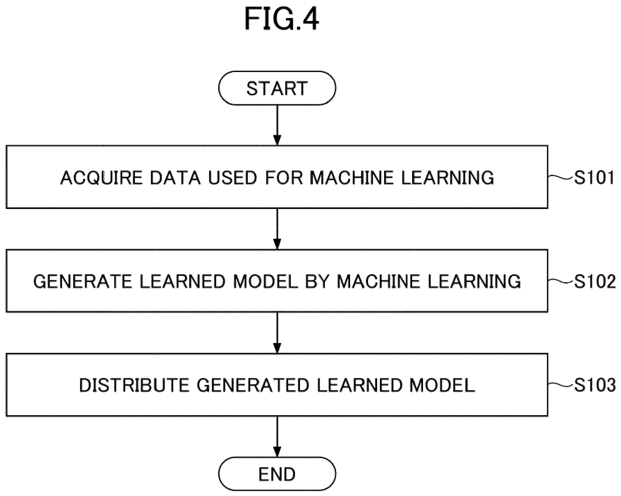

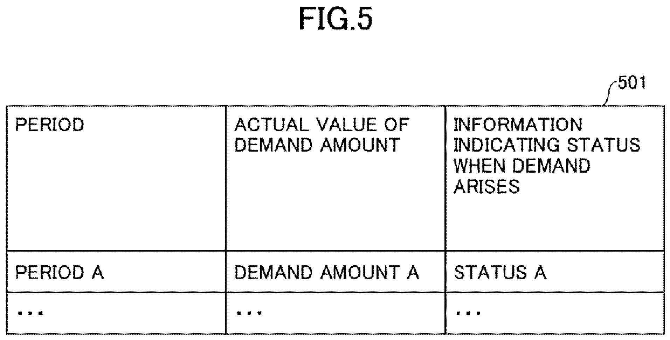

An example of processing during learning of the information processing apparatus 10A according to the embodiment will be described with reference to FIGS. 4 and 5. FIG. 4 is a flowchart illustrating an example of processing during the learning of the information processing apparatus 10A according to the embodiment. FIG. 5 is a diagram for explaining an example of training data according to the embodiment. An example of predicting demand for air conditioners is described below.

In step S101, the acquiring unit 11 of the information processing apparatus 10A acquires training data 501 (learning data) illustrated in FIG. 5. In the example of FIG. 5, a data set including a combination of the actual value of the demand amount in each period and information indicating the status in each period is acquired as the training data 501. The acquiring unit 11 may process (pre-process) the data recorded in a predetermined DB (database) to generate the data set.

The actual value of the demand amount may be, for example, the number of shipments of articles. Thus, the user of the information processing apparatus 10B can create an inventory plan of the articles according to the estimation value of the predetermined quantile of the number of shipments of the articles in a certain period. Further, the actual value of demand may be the amount of new orders received. The actual value of the demand amount is the objective variable to be inferred. The acquiring unit 11 may logarithmically transform (logarithmize) the actual value of the demand amount. This can, for example, reduce the overestimation of at least some of the explanatory variables in a certain period when the actual value of the demand amount in the certain period is extremely large.

Information indicating the status is information indicating the status when demand arises, and is an explanatory variable for predicting the demand amount. Information indicating the status may include at least one of the following: the number of new orders received, the temperature, the weather (climate), the manufacturing cost per product, the amount of orders received but not delivered (the amount of backlog), and the actual demand excluding orders of an amount greater than or equal to the threshold. Further, the information indicating the status when demand arises may include at least one of the amount of potential orders that may be received, the sales target set for sales representatives, and the sales target set for stores. Further, the information indicating the status when a demand arises may include at least one of the following: the operating capacity of air conditioners shipped within a predetermined period (for example, the previous month) prior to each relevant period, the number of indoor units shipped within a predetermined period before each relevant period, the number of outdoor units shipped within a predetermined period before each relevant period, and the type of air conditioner.

The amount of new orders received is the amount of articles, etc., for which new orders have been received. The temperature may be, for example, at least one of the highest and lowest temperatures in each period. The weather may be the weather of each day in each period. The weather for each day may be indicated by weather classification such as "sunny", "cloudy", or "rainy".

The manufacturing cost per product is the manufacturing cost of the product that is the product. This makes it possible to predict demand appropriately when, for example, articles with high manufacturing costs tend to have large variations in demand.

The amount of orders received but not delivered is the amount of articles, etc., that have not been delivered after receiving an order. This enables appropriate demand prediction, for example, when there is a large backlog of orders for commercial air conditioners that take a long time (lead time) from when these articles are ordered to when these articles are delivered, there is a tendency that new orders decrease subsequently.

The actual demand excluding orders of an amount greater than or equal to the threshold is at least one of an amount obtained by excluding orders with an order amount greater than or equal to the threshold from the amount of new orders received as described above, or an amount obtained by excluding orders with an order amount greater than or equal to the threshold from the amount of orders received but not delivered as described above. Accordingly, machine learning can be performed based on data that excludes, for example, the actual orders received for unexpected large-scale business deals that are low in terms of the order frequency and large in terms of the order amount, so that the demand prediction can be made appropriately.

The amount of potential orders that may be received is the amount that is expected to be received with a certain degree of certainty or more, for example, due to inquiries (approaches) about the terms and conditions of the sale and purchase, and requests for quotes from the customer, etc.

The sales target set for sales representatives is, for example, the target number of sales set for each sales representative at a predetermined sales store. The sales target set for a store is the sales target set for a predetermined store. This allows, for example, an appropriate demand prediction to be made when the amount of orders received tends to increase during periods of strong sales and the like.

The operating capacity of air conditioners may be, for example, the heating and cooling capacity of the air conditioner. The heating and cooling capacity is the value of the thermal energy removed from or added to the room per unit time and may be expressed in units of kW. This makes it possible to predict the demand appropriately when, for example, products of a predetermined class of operating capability tend to be shipped by approximately the same amount every month.

The number of indoor units shipped within a predetermined period before each relevant period and the number of outdoor units shipped within a predetermined period before each relevant period may be, for example, the number of indoor units and the number of outdoor units of air conditioners shipped in the preceding month, respectively. Thus, for example, when there is a correlation between the number of shipped units of outdoor units of a certain model and the number of shipped units of indoor units of the corresponding model, demand can be predicted appropriately.

The type of air conditioner may be, for example, the type of use of the air conditioner such as commercial or residential. This enables appropriate demand prediction when, for example, commercial use air conditioners tend to have a high correlation between the amount of backlog orders and the demand amount, and residential use air conditioners tend to have a high correlation between the temperature and the demand amount, etc.

Subsequently, the generating unit 12 of the information processing apparatus 10A performs machine learning based on a predetermined number of quantiles (Quantile Regression) based on the acquired training data to generate a learned model (step S102). Here, the generating unit 12 may generate a learned model that estimates (predicts) a value by which a distribution of the actual values of the demand amount according to the status when demand arises is divided, at a position deviating from the center of the distribution by a predetermined amount. Thus, for example, the demand amount can be appropriately predicted according to the bias in the distribution of the actual values of the demand amount. Further, the relationship between explanatory variables and the variance of the error is taken into account, and the degree of deviation from the median value of the demand amount (prediction range) can be appropriately predicted with a certain degree of certainty in a predetermined status.

The generating unit 12 may individually generate a first learned model for estimating the upper limit value of the demand amount according to the status, a second learned model for estimating the median value, and a third learned model for estimating the lower limit value. In this case, the generating unit 12 may generate the first learned model, the second learned model, and the third learned model, for example, with the value of $\tau$, to be described later, as 3/4, 1/2, and 1/4. In this case, the user calculates, with the information processing apparatus 10B, the 3/4 quantile (the fourth quartile, the upper quartile) as the upper limit value in the demand prediction and calculates the 1/4 quantile (the fourth quartile, lower quartile) as the lower limit value in the demand prediction. Thus, for example, the user of the information processing apparatus 10B can identify how far the prediction deviates from the median value, with a certain degree of certainty, according to the estimation value of each quantile of the number of shipments of articles in a certain period.

(Loss function in machine learning)

The generating unit 12 may generate the learned model by machine learning based on a predetermined quantile with respect to the distribution of the actual values of the demand amount. In this case, the generating unit 12 may perform machine learning using f($\gamma$) in the following formula (1) as a loss function. In the following, $\tau$ is a real number from 0 to 1, which is a value for dividing the distribution into $\tau$: 1-$\tau$. The value of z may be set in advance by an administrator or the like of the information processing apparatus 10A. The notation of $\gamma$ is the difference (residual) between the actual value of demand amount and the estimation value of the $\tau$ quantile, which is the value dividing the distribution into $\tau$: 1-$\tau$.

[Formula 1]

$$f(\gamma) = \begin{cases} \tau\gamma & \gamma \geqq 0 \\ (\tau - 1)\gamma & \gamma < 0 \end{cases} \qquad \cdots \ (1)$$

The generating unit 12 calculates the value of the $\tau$ quantile that minimizes the loss, which is the weighted sum of the absolute values of the residuals, while performing different asymmetric weighting according to the sign of the residuals with f ($\gamma$) in formula (1).

((Example of improving convergence of machine learning))

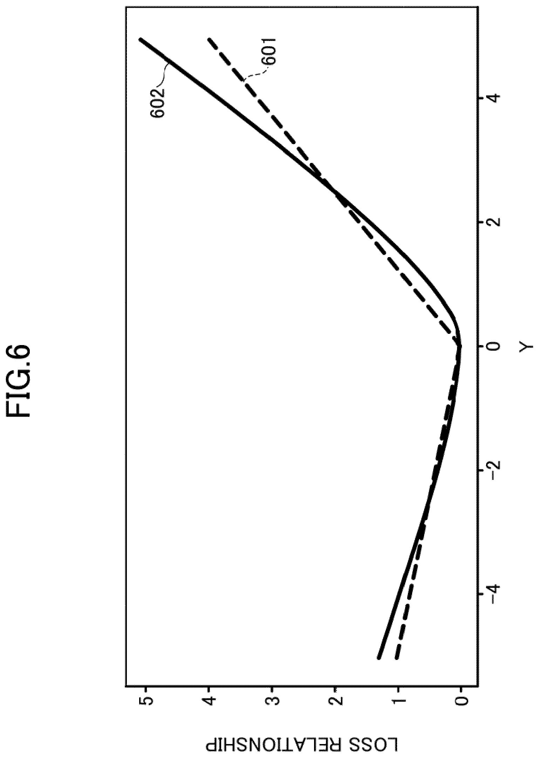

The generating unit 12 may use a loss function that becomes a curve in a predetermined range, including the point where there is no difference between the $\tau$ quantile of the demand value and the actual value of the demand value (the origin in FIG. 6). In this case, the generating unit 12 may perform machine learning by using f($\gamma$) in the following formula (2) as a loss function. According to formula (2), the distribution of the demand amount is roughly divided into $\tau$: 1-$\tau$.

[Formula 2]

$$f(\gamma) = \begin{cases} 2\tau(\gamma - ln(1 + \gamma)) & \gamma \geqq 0 \\ 2(\tau - 1)(\gamma + ln(1 - \gamma)) & \gamma < 0 \end{cases} \qquad \cdots (2)$$

FIG. 6 illustrates a line 601 for each value of the loss function $f(\gamma)$ in formula (1) and a curve 602 for each value of the loss function $f(\gamma)$ in formula (2) when $\tau$ is 3/4 (0.75). In FIG. 6, the vertical axis is the value of the loss function $f(\gamma)$, and the horizontal axis Y is the residual between the actual value and the estimation value of the $\tau$ quantile.

The loss function $f(\gamma)$ of formula (2), which has a non-linear and continuous value change with a residual of zero, can be used instead of formula (1), which has a linear value change with a residual of zero, so that machine learning can converge more quickly.

(Machine learning techniques)

As a method of machine learning, the generating unit 12 may use a gradient method to obtain a value with minimum loss weighted by a loss function. In this case, the generating unit 12 may perform machine learning by using, for example, GBDT (Gradient Boosting Decision Tree), Random Forest, Decision Tree, Neural Network, or the like.

Subsequently, the output unit 13 of the information processing apparatus 10A transmits the learned model generated by the generating unit 12 to the information processing apparatus 10B (step S103). Here, when the output unit 13 receives a request from the information processing apparatus 10B, for example, the output unit 13 may cause the information processing apparatus 10B to download the learned model.

«Processing during inference»

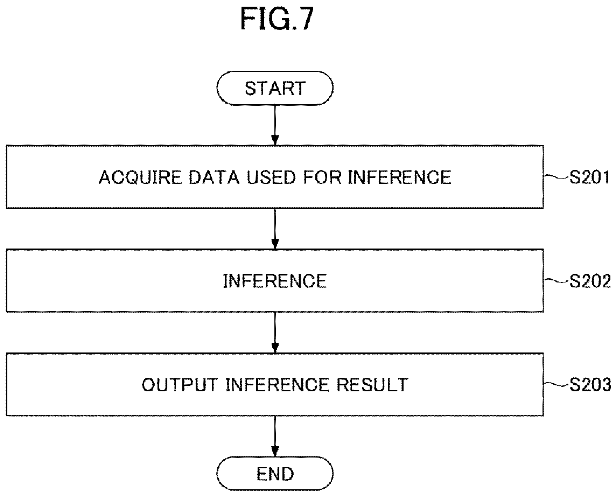

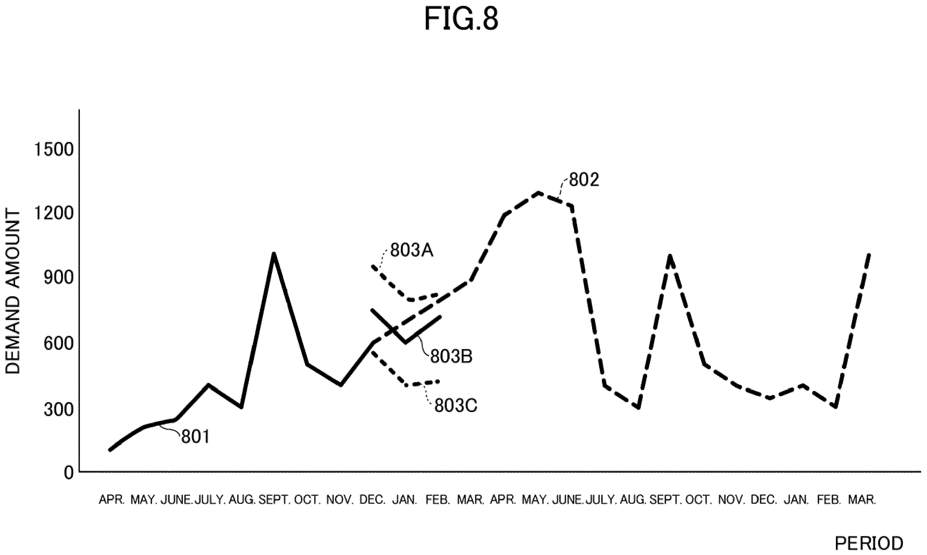

Next, with reference to FIG. 7 and FIG. 8, an example of the processing at the time of inference of the information processing apparatus 10B according to the embodiment will be described. FIG. 7 is a flowchart illustrating an example of processing during inference of the information processing apparatus 10B according to the embodiment. FIG. 8 is a diagram for explaining an example of the display screen of the demand prediction result according to the embodiment.

In step S201, the acquiring unit 21 of the information processing apparatus 10B acquires the learned model generated by the information processing apparatus 10A and test data for making inferences using the learned model. Here, the acquiring unit 21 acquires test data having data of items similar to those of the information indicating the status included in the training data 501 in FIG. 5.

The data of each item included in the information indicating the relevant status when used as test data may be prediction values. In this case, for example, data for items included in the information indicating the status, such as temperature, weather, sales target set for sales representatives, and sales target set for stores, may be prediction values for the period to be subject to demand prediction (for example, this month or next month, etc.). The acquiring unit 21 may process (pre-process) the data recorded in the predetermined DB to generate the test data.

Then, the inference unit 22 of the information processing apparatus 10B makes a prediction (inference) of the demand amount based on the learned model and the test data acquired by the acquiring unit 21 (step S202). Here, the inference unit 22 calculates the prediction value of the demand amount in the period to be subject to demand prediction by inputting the test data into the learned model.

Here, the inference unit 22 may calculate the estimation value of the upper limit, the median, and the lower limit of the demand amount in the period to be subject to the demand prediction by inputting the test data to the first learned model for estimating the upper limit of the demand amount according to the status, the second learned model for estimating the median, and the third learned model for estimating the lower limit, respectively.

Subsequently, the output unit 23 of the information processing apparatus 10B outputs the demand amount predicted by the inference unit 22 (step S203). In the example of FIG. 8, the output unit 23 displays, on the display screen, a broken line 801 of the actual value of the past demand amount and a line 802 of the planned value of the future demand amount that is set in advance. Then, the output unit 23 displays broken lines 803A, 803B, and 803C, which are calculated by the inference unit 22 and respectively indicate the upper limit, the median, and the lower limit of the demand amount in the period to be subject to demand prediction.

<Processing of the second embodiment>

<<Processing during learning>>

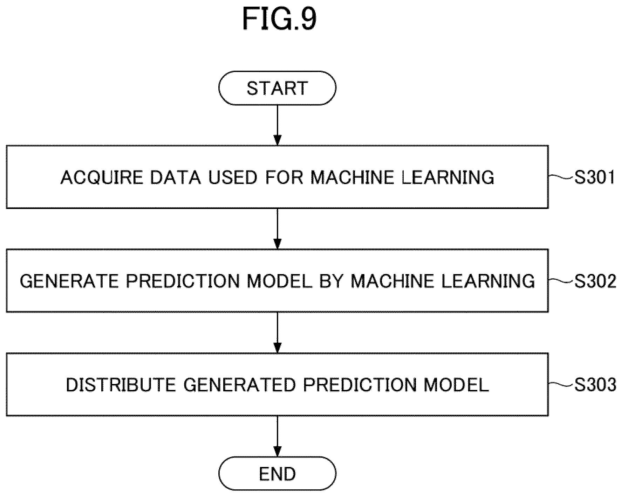

An example of processing during learning of the information processing apparatus 10A according to the second embodiment will be described with reference to FIG. 9. FIG. 9 is a flowchart illustrating an example of processing during learning of the information processing apparatus 10A according to the embodiment. An example of predicting demand for air conditioners is described below.

In step S301, the acquiring unit 11 of the information processing apparatus 10A acquires data used for learning, for example, as illustrated and explained in FIG. 5. The data used for learning is a data set including a combination of the actual value of the demand amount in each period and information indicating the status in each period.

In step S302, the generating unit 12 of the information processing apparatus 10A generates a prediction model by machine learning based on the learning data included in the data used for learning. In step S303, the output unit 13 of the information processing apparatus 10A distributes the prediction model generated by the generating unit 12 to the information processing apparatus 10B. Here, when the output unit 13 receives a request from the information processing apparatus 10B, for example, the output unit 13 may cause the information processing apparatus 10B to download the prediction model.

«Processing during inference»

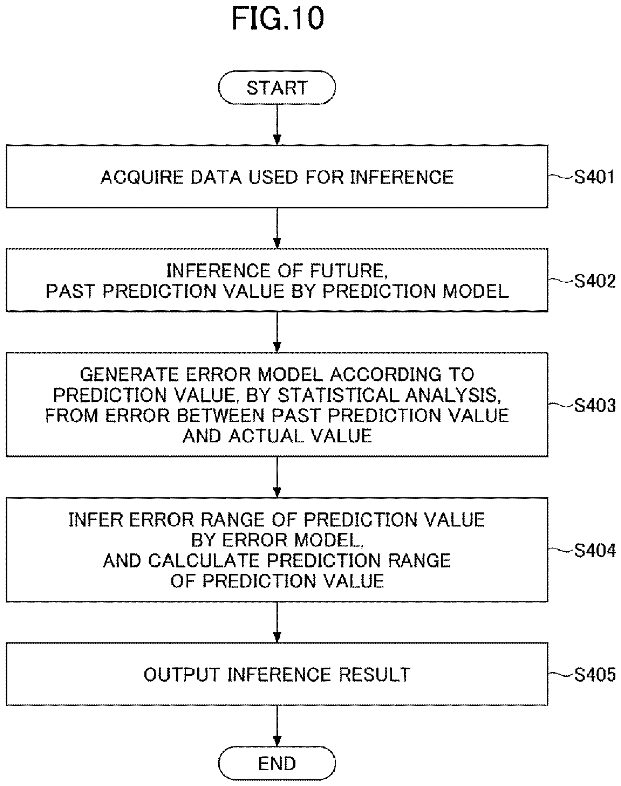

Next, with reference to FIG. 10, an example of processing at the time of inference by the information processing apparatus 10B according to the second embodiment will be described. FIG. 10 is a flowchart illustrating an example of processing during inference by the information processing apparatus 10B according to the embodiment.

In step S401, the acquiring unit 21 of the information processing apparatus 10B acquires the learned model generated by the information processing apparatus 10A and data used for inference. For example, as data to be used for inference, the acquiring unit 21 acquires test data including data of items similar to those of the information indicating the status included in the training data 501 described with reference to FIG. 5.

Then, in step S402, the inference unit 22 of the information processing apparatus 10B makes a prediction (inference) of future and past demand amounts based on the learned model and the test data acquired by the acquiring unit 21. Here, the inference unit 22 calculates the prediction value of future and past demand amounts by inputting test data into the learned model.

In step S403, the inference unit 22 generates an error model by statistical analysis as described later, according to the prediction value from the error between the prediction value of the past demand amount inferred in step S402 and the actual value of the past demand amount included in the test data. In this way, the inference unit 22 generates an error model to infer the error range according to the prediction value of the demand amount.

In step S404, the inference unit 22 infers the error range of the prediction value of the future demand amount by the error model and calculates the prediction range of the prediction value of the future demand amount. The prediction range is the degree to which the prediction deviates from the median value of the demand amount with a certain degree of certainty in a predetermined status. In this way, the inference unit 22 can calculate estimate values of the upper limit, the median, and the lower limit of the demand amount in the period to be subject to demand prediction by using a prediction model that estimates the median of the demand amount according to the status and an error model that estimates the prediction range according to the prediction value of the demand amount.

In step S405, the output unit 23 of the information processing apparatus 10B outputs the future demand amount predicted by the inference unit 22.

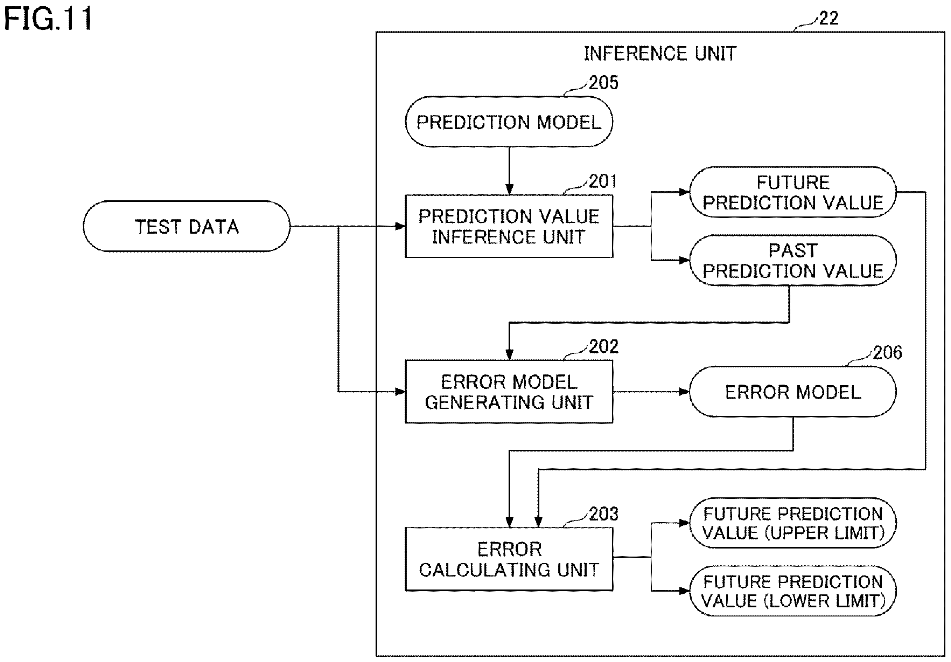

The processing at the time of inference by the information processing apparatus 10B according to the second embodiment will be further described with reference to FIG. 11. FIG. 11 is an explanatory diagram illustrating an example of processing during inference of the information processing apparatus 10B according to the second embodiment.

The inference unit 22 includes a prediction value inference unit 201, an error model generating unit 202, and an error calculating unit 203. Based on a prediction model 205 generated by the generating unit 12 of the information processing apparatus 10A and the test data, the prediction value inference unit 201 infers the prediction value of future and past demand amounts.

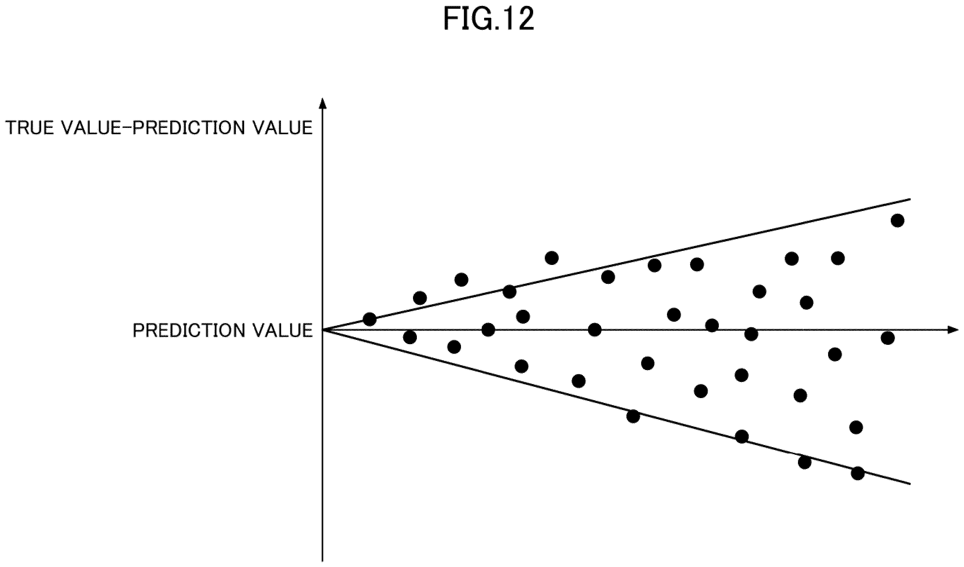

The error model generating unit 202 generates an error model 206 for inferring the error range according to the prediction value of the demand amount as illustrated in, for example, FIG. 12, from the error between the prediction value of the past demand amount inferred by the prediction value inference unit 201 and the actual value of the past demand amount of the test data. FIG. 12 is an illustration of an example of an error model that infers the error range according to the prediction value of the demand amount. The error model 206 can be expressed, for example, by the following formula (3) .
[Formula 3]

$$\begin{cases} y_{upper} = y + \mu + k\sigma(x) \\ y_{lower} = y + \mu - k\sigma(x) \end{cases} \quad \cdots \ (3)$$

For example, in FIG. 12, the horizontal axis x represents the prediction value of the demand amount, and the vertical axis y represents the error range according to the prediction value of the demand amount. As indicated in formula (3), the error range varies in variance according to the prediction value of the demand amount. Note that the error range according to the prediction value of the demand amount illustrated on the vertical axis in FIG. 12 is calculated by subtracting the inferred prediction value of the demand amount from the actual value of the demand amount expressed as the true value.

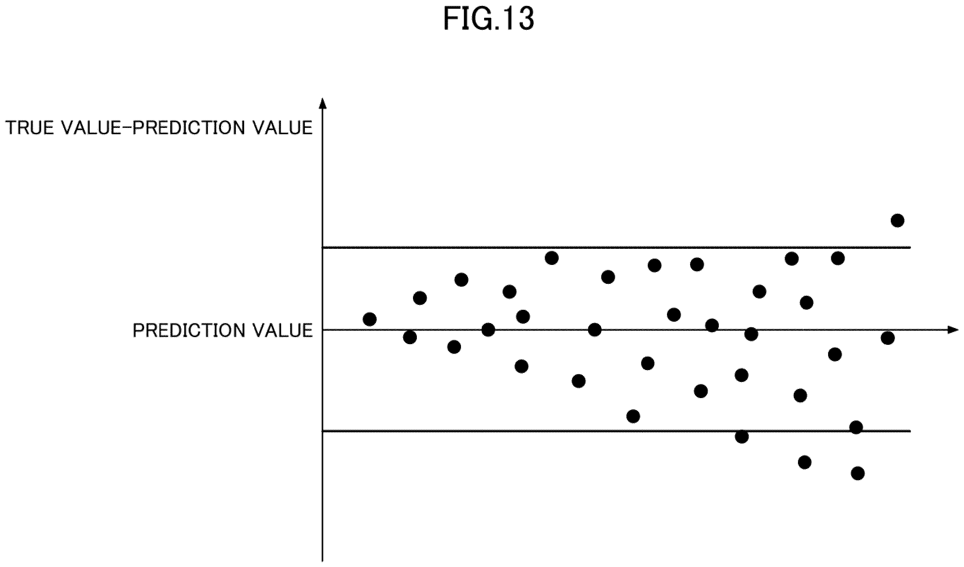

As illustrated in FIG. 12, in the second embodiment, an error model whose variance varies according to the prediction value of the demand amount can be generated to estimate the error range of the prediction value of the demand amount that is suitable for the actual status. Note that with the error range according to regular variance estimation, it is not possible to incorporate the variance change according to the prediction value of the demand amount as illustrated in FIG. 13, for example, and as indicated in formula (4) below, the error range does not change according to the prediction value of the demand amount. FIG. 13 is an illustration of an example of the error range according to regular variance estimation.

[Formula 4]

$$\begin{cases} y_{upper} = y + \mu + k\sigma \\ y_{lower} = y + \mu - k\sigma \end{cases} \quad \cdots \ (4)$$

Referring back to FIG. 11, the error calculating unit 203 can calculate, by the error model 206, the upper and lower limits of the prediction value of the future demand amount as the prediction range of the prediction value of the future demand amount by inferring the error range of the prediction value of the future demand amount inferred by the prediction value inference unit 201.

For example, the output unit 23 can display, for example, a broken line 803B in FIG. 8, with the prediction value of the future demand amount in the period to be subject to demand prediction inferred by the prediction value inference unit 201, as the median value. The output unit 23 can display the upper limit of the prediction value of the future demand amount calculated by the error calculating unit 203 and the lower limit of the prediction value of the future demand amount calculated by the error calculating unit 203 as, for example, broken lines 803A and 803C, respectively, in FIG. 8.

In this way, the inference unit 22 can estimate (predict), by means of the prediction model 205 and the error model 206, the value by which the distribution of the actual values of the demand amount according to the status when the demand arises, is divided at a position deviating from the center of the distribution by a predetermined amount.

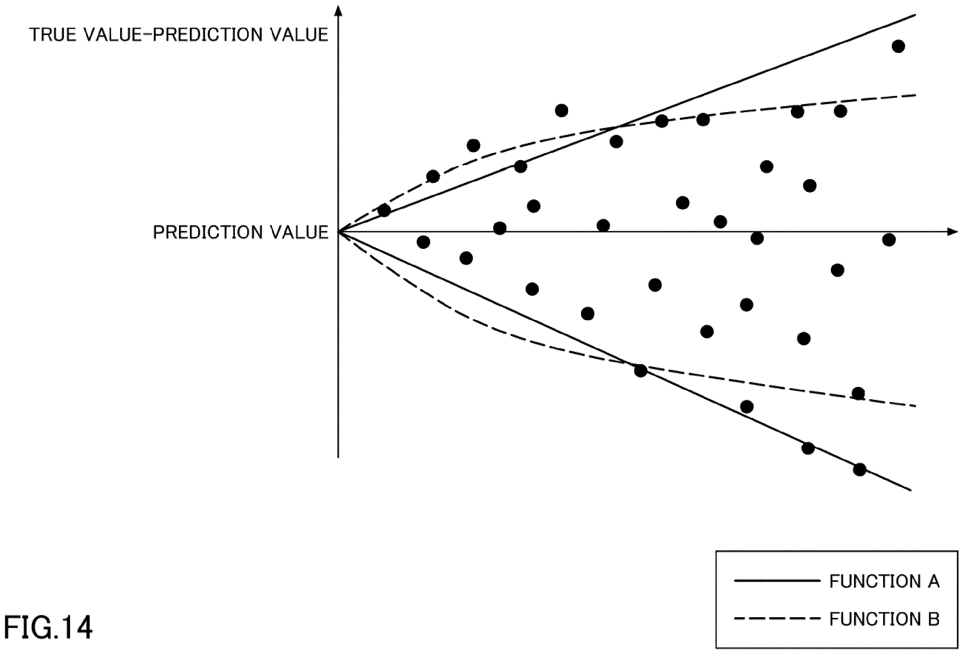

It is expected that the distribution of the error in the prediction value of the demand amount will differ depending on the type of product and sales status. Therefore, in the second embodiment, a more suitable error model may be generated by comparing multiple functions, for example, as illustrated in FIG. 14.

FIG. 14 illustrates one example of a method of generating a suitable error model by comparing multiple functions. For example, the distribution of errors is assumed to be a normal distribution with the prediction value of the demand amount as the average, and a model is generated in which the variance varies by a function of the prediction value. Multiple functions of variance are set and models are compared by AIC (Akaike's Information Criterion) to generate an error model of the distribution of errors determined by the optimal function.

AIC is an example of an index used to select an appropriate (high likelihood) model as a model for the objective variable from among multiple models generated with different explanatory variable candidates, and is a criterion expressing how well test data match the model. In the second embodiment, the error model of the distribution of errors determined by the optimal function by comparison with AIC is selected, and the error range can be calculated from the selected error model with the probability falling within the range of the function.

<Modified example>

Each of the functional units of the information processing apparatus 10A and the information processing apparatus 10B may be implemented by cloud computing provided by, for example, one or more computers. Further, part of the processing of the information processing apparatus 10A and the information processing apparatus 10B may be performed by another information processing apparatus. In this case, for example, the process of generating training data and the process of generating test data may be performed by another information processing apparatus.

Although the present invention has been described above based on examples, the present invention is not limited to the above examples, and various variations are possible within the scope of claims. The present application claims priority based on Japanese Patent Application No. 2020-119368 filed with the Japan Patent Office on July 10, 2020, the entire contents of which are hereby incorporated by reference.

[Reference Signs List]

| 1 | information processing system |
| 10A | information processing apparatus |
| 11 | acquiring unit |
| 12 | generating unit |
| 13 | output unit |
| 10B | information processing apparatus |
| 21 | acquiring unit |
| 22 | inference unit |
| 23 | output unit |
| 201 | prediction value inference unit |
| 202 | error model generating unit |
| 203 | error calculating unit |
| 205 | prediction model |
| 206 | error model |

**Claims**

1.  A generation method in which an information processing apparatus executes a process of generating a model configured to estimate a value by which a distribution of actual values of a demand amount of an article or a service is divided at a position that deviates by a predetermined amount from a center of the distribution, based on a data set including a combination of the actual value of the demand amount and information indicating a status when demand arises.

2.  The generation method according to claim 1, wherein

     the model includes two types of models, and
     the process of generating the model includes generating

          a first model among the two types of models configured to infer the center of the distribution by performing learning by using the data set, and
          a second model among the two types of models configured to infer a prediction range of the distribution by performing learning by using an asymmetric loss function that is obtained based on a predetermined quantile with respect to the distribution of the actual values of the demand amount.

3.  The generation method according to claim 2, wherein the process of generating the model includes generating the second model by performing learning by using a loss function that becomes a curve within a predetermined range including a point where there is no difference between the predetermined quantile and the actual value of the demand amount.

4.  The generation method according to claim 1, wherein

     the model includes two types of models, and
     the process of generating the model includes generating

a first model among the two types of models configured to infer the center of the distribution by performing learning by using the data set, and
a second model among the two types of models configured to infer a prediction range of the distribution from a probability distribution of an error range of a prediction value of the demand amount.

5. The generation method according to claim 4, wherein the process of generating the model includes generating the second model configured to select one function from among a plurality of types of functions that change according to the prediction value of the demand amount, and to infer the prediction range of the distribution from the probability distribution of the error range that is determined by the selected function.

6. The generation method according to any one of claims 1 to 5, wherein the information indicating the status includes at least one of a number of new orders received, a temperature, weather, a manufacturing cost per product, an actual demand excluding an order of an amount greater than or equal to a threshold, an amount of orders received but not delivered, an amount of potential orders that may be received, a sales target set for a sales representative, and a sales target set for a store.

7. The generation method according to any one of claims 1 to 6, wherein the information indicating the status includes at least one of an operating capacity of an air conditioner shipped within a predetermined period, a number of indoor units shipped within a predetermined period, and a number of outdoor units shipped within a predetermined period.

8. A generation apparatus configured to generate a model configured to estimate a value by which a distribution of a demand amount of an article or a service in a predetermined status is divided at a position that deviates by a predetermined amount from a center of the distribution, based on a data set including a combination of an actual value of the demand amount and information indicating a status when demand arises.

9. A program that causes an information processing apparatus to execute a process of generating a model configured to estimate a value by which a distribution of actual values of a demand amount of an article or a service is divided at a position that deviates by a predetermined amount from a center of the distribution, based on a data set including a combination of the actual value of the demand amount and information indicating a status when demand arises.

10. An information processing method in which an information processing apparatus executes a process of outputting a value by which a distribution of actual values of a demand amount of an article or a service is divided at a position that deviates by a predetermined amount from a center of the distribution, by using a model generated based on a data set including a combination of the actual value of the demand amount and information indicating a status when demand arises.

11. An information processing apparatus configured to output a value by which a distribution of actual values of a demand amount of an article or a service is divided at a position that deviates by a predetermined amount from a center of the distribution, by using a model generated based on a data set including a combination of the actual value of the demand amount and information indicating a status when demand arises.

12. A program that causes an information processing apparatus to execute a process of outputting a value by which a distribution of actual values of a demand amount of an article or a service is divided at a position that deviates by a predetermined amount from a center of the distribution, by using a model generated based on a data set including a combination of the actual value of the demand amount and information indicating a status when demand arises.

# FIG.1

# FIG.2

EP 4 181 038 A1

# FIG.3

# FIG.4

```
        ┌─────────┐
        │  START  │
        └────┬────┘
             │
             ▼
┌─────────────────────────────────────────────┐
│  ACQUIRE DATA USED FOR MACHINE LEARNING       │──S101
└──────────────────┬──────────────────────────┘
                   │
                   ▼
┌─────────────────────────────────────────────┐
│ GENERATE LEARNED MODEL BY MACHINE LEARNING    │──S102
└──────────────────┬──────────────────────────┘
                   │
                   ▼
┌─────────────────────────────────────────────┐
│   DISTRIBUTE GENERATED LEARNED MODEL           │──S103
└──────────────────┬──────────────────────────┘
                   │
                   ▼
             ┌─────────┐
             │   END   │
             └─────────┘
```

# FIG.5

| PERIOD | ACTUAL VALUE OF DEMAND AMOUNT | INFORMATION INDICATING STATUS WHEN DEMAND ARISES |
|---|---|---|
| PERIOD A | DEMAND AMOUNT A | STATUS A |
| . . . | . . . | . . . |

501

FIG.6

EP 4 181 038 A1

18

# FIG.7

```
         ┌─────────┐
         │  START  │
         └─────────┘
              │
              ▼
┌──────────────────────────────────────┐
│   ACQUIRE DATA USED FOR INFERENCE     │──S201
└──────────────────────────────────────┘
              │
              ▼
┌──────────────────────────────────────┐
│             INFERENCE                 │──S202
└──────────────────────────────────────┘
              │
              ▼
┌──────────────────────────────────────┐
│      OUTPUT INFERENCE RESULT          │──S203
└──────────────────────────────────────┘
              │
              ▼
         ┌─────────┐
         │   END   │
         └─────────┘
```

# FIG.8

# FIG.9

START

ACQUIRE DATA USED FOR MACHINE LEARNING — S301

GENERATE PREDICTION MODEL BY MACHINE LEARNING — S302

DISTRIBUTE GENERATED PREDICTION MODEL — S303

END

# FIG.10

START

ACQUIRE DATA USED FOR INFERENCE ——S401

INFERENCE OF FUTURE,
PAST PREDICTION VALUE BY PREDICTION MODEL ——S402

GENERATE ERROR MODEL ACCORDING TO
PREDICTION VALUE, BY STATISTICAL ANALYSIS,
FROM ERROR BETWEEN PAST PREDICTION VALUE
AND ACTUAL VALUE ——S403

INFER ERROR RANGE OF PREDICTION VALUE
BY ERROR MODEL,
AND CALCULATE PREDICTION RANGE
OF PREDICTION VALUE ——S404

OUTPUT INFERENCE RESULT ——S405

END

# FIG.11

INFERENCE UNIT 22

PREDICTION MODEL 205

TEST DATA

PREDICTION VALUE INFERENCE UNIT 201

FUTURE PREDICTION VALUE

PAST PREDICTION VALUE

ERROR MODEL GENERATING UNIT 202

ERROR MODEL 206

ERROR CALCULATING UNIT 203

FUTURE PREDICTION VALUE (UPPER LIMIT)

FUTURE PREDICTION VALUE (LOWER LIMIT)

EP 4 181 038 A1

FIG.12

FIG.13

TRUE VALUE–PREDICTION VALUE

PREDICTION VALUE

FIG.14

TRUE VALUE-PREDICTION VALUE

PREDICTION VALUE

FUNCTION A

FUNCTION B

EP 4 181 038 A1

## INTERNATIONAL SEARCH REPORT

| International application No. |
|---|
| **PCT/JP2021/024339** |

**A. CLASSIFICATION OF SUBJECT MATTER**

*G06Q 10/04*(2012.01)i
FI:   G06Q10/04

According to International Patent Classification (IPC) or to both national classification and IPC

**B. FIELDS SEARCHED**

Minimum documentation searched (classification system followed by classification symbols)

G06Q10/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-113915 A (FUJITSU LTD.) 11 July 2019 (2019-07-11) paragraphs [0016]-[0042], fig. 1 | 1, 6-12 |
| A | | 2-5 |
| Y | JP 2020-015959 A (NIPPON STEEL CORP.) 30 January 2020 (2020-01-30) paragraphs [0023]-[0049], fig. 1 | 1, 6-12 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 September 2021** | **28 September 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2021/024339** |

| Patent document cited in search report | | | Publication date (day/month/year) | Patent family member(s) | Publication date (day/month/year) |
| --- | --- | --- | --- | --- | --- |
| JP | 2019-113915 | A | 11 July 2019 | US 2019/0197435 A1 paragraphs [0036]-[0066], fig. 1 | |
| JP | 2020-015959 | A | 30 January 2020 | (Family: none) | |

Form PCT/ISA/210 (patent family annex) (January 2015)

**REFERENCES CITED IN THE DESCRIPTION**

**Patent documents cited in the description**

- JP 2017010436 A
- JP 2020119368 A